Europäisches Patentamt

European Patent Office

Office européen des brevets

(19)

(11) Veröffentlichungsnummer: **0 002 736**
B1

# EUROPÄISCHE PATENTSCHRIFT

(12)

(45) Veröffentlichungstag der Patentschrift: **20.01.82**

(21) Anmeldenummer: **78101679.5**

(22) Anmeldetag: **14.12.78**

(51) Int. Cl.³: **G 03 B 27/52,**
G 03 G 15/04

(54) Belichtungsanordnung für Kopiergeräte.

(30) Priorität: **22.12.77 DE 2757386**

(43) Veröffentlichungstag der Anmeldung:
**11.07.79 Patentblatt 79/14**

(45) Bekanntmachung des Hinweises auf die Patenterteilung:
**20.01.82 Patentblatt 82/3**

(84) Benannte Vertragsstaaten:
**BE CH FR GB IT NL**

(56) Entgegenhaltungen:
**DE - A - 1 959 152**
**US - A - 3 584 952**

(73) Patentinhaber: **AGFA-GEVAERT Aktiengesellschaft**
**Camera-Werk**
**Postfach**
**D-8000 München 90 (DE)**

(72) Erfinder: **Feneberg, Paul**
**Am Weiher 21**
**D-8035 Buchendorf (DE)**
Erfinder: **Königl, Georg**
**Zacharias-Werder-Strasse 14**
**D-8000 München 60 (DE)**
Erfinder: **Kirchhof, Günther**
**Enzianring 68**
**D-8021 Taufkirchen (DE)**
Erfinder: **Schätz, Anton**
**Sachranger Strasse 12**
**D-8000 München 90 (DE)**

Courier Press, Leamington Spa, England.

Belichtungsanordnung für Kopiergeräte

Die Erfindung betrifft eine Belichtungsanordnung für Kopiergeräte nach dem Gattungsbegriff des Anspruchs. Derartige Belichtungsanordnungen sind u.a. aus der DE—OS 19 59 152 und der US-PS 3,584,952 bekannt. Dabei sind die Öffnunggen der Zwischenbildblenden so gestaltet, daß deren auf dem Kopieträger abgebildete Bereiche sich in Verschiebungsrichtung derart ergänzen, daß für die gesamten Bildelemente die Summe der anteiligen Belichtung in Verschiebungsrichtung der Objektive konstant ist.

Es ist das Ziel der vorliegenden Erfindung, eine leicht herstellbare Zwischenbildblende der vorgennanten Art zu schaffen, bei welcher sich die Teilbelichtungen besonders genau zu einer einheitlichen Gesamtbelichtung ergänen. Gemäß der Erfindung wird die gestellte Aufgabe durch die im kenn-zeichnenden Teil des Anspruchs aufgeführten Merkmale gelöst.

Einzelheiten der Erfindung ergeben sich aus der Beschreibung, worin im folgenden anhand der Zeichnung Ausführungsbeispiele näher erläutert werden.

Es zeigen

Figur 1 einen Längsschnitt durch eine erfindungsgemäße Belichtungsanordnung,

Figur 2 eine erfindungsgemäße Zwischenbildblende, und

Figur 3 die Überlappung ihrer Bildbereiche.

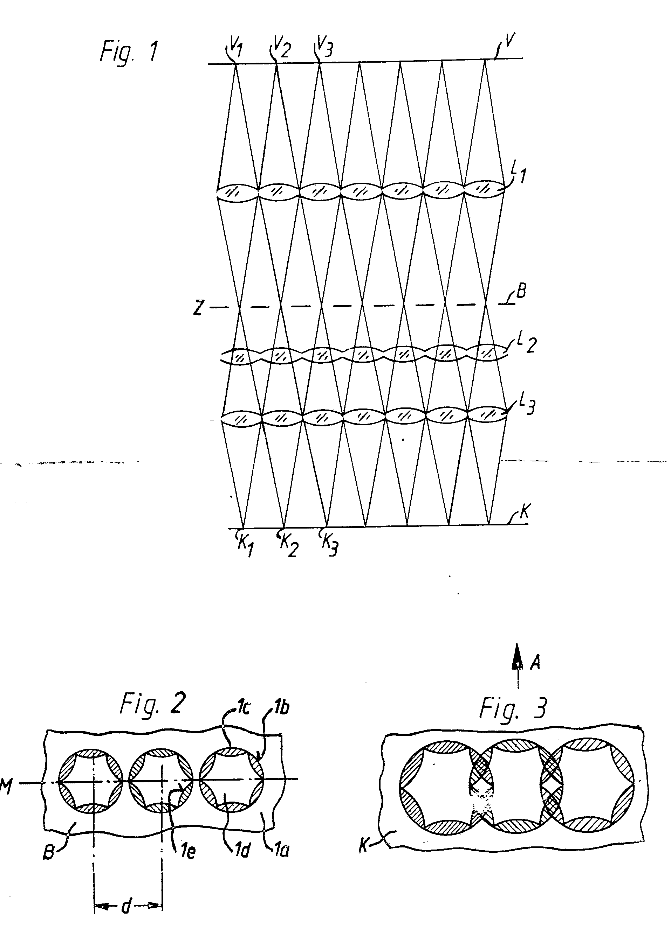

Figur 1 zeigt schematisch einen Längsschnitt durch eine erfindungsgemäße Belichtungsanordnung. Dabei werden Einzelelemente $V_1$ einer Vorlage V auf entsprechende Einzelelemente $K_1$ einer lichtempfindlichen Schicht K mit einem System aus mehreren hintereinander angeordneten Linsenrasterleisten $L_1$ bis $L_3$ abgebildet. In einer Zwischenbildebene Z, in der die Einzelelemente um den Faktor, 1,1 bis 2,5 verkleinert abgebildet werden, ist eine Blende B mit je einer Öffnung für jedes Objektivelement angeordnet. Die Form der Blendenöffnungen bestimmt, da sie als Gesichtsfeldblende wirkt, die Form des Abbildungselementes $K_1$ auf dem Kopieträger K.

Dabei dienen die Linsenleisten $L_1$ und $L_3$ zusammen als abbildendes System, während die Linsenleiste $L_2$ lediglich als Feldlinse wirkt. Es ist natürlich möglich, die Feldlinse aufzuspalten und die Gesichtsfeldblende daswischen am idealen Ort des Zwischenbildes anzuordnen.

Gemäß Figur 2 wird die Zwischenbildblende B von einem transparenten Träger gebildet, dessen Oberfläche la mit einer Verspiegelung versehen ist, welche alle aus der Vorlagenebene V kommenden Strahlen am Durchtritt durch die Zwischenbildblende B hindert Diese Verspiegelung ist lediglich im Bereich der kreisrunden Ausschnitte 1b unterbrochen, wobei zwischen einem voll durchlässigen Innenteil 1d und einem voll verspiegelten Außenteil la der Zwischelbildblende noch halbverspiegelte bzw. teildurchlässige Segmente 1c eingeschaltet sind. Das Innenteil 1d wird von einem regelmäßigen Sechseck gebildet, dessen Kanten Kreisbögen sind, deren Krümmingsmittelpunkte auf einem zum Mittelpunkt des Sechsecks konzentrischen Kreises liegen, dessen Durchmesser größer als der des Umkreises des Sechseckes ist.

Die Sechsecke liegen auf einer gemeinsamen, in Richtung der jeweiligen Linsenreihe bzw. quer zur Bewegungsrichtung A von Vorlage und Kopie verlaufenden Mittellinie M. Ihr Mittenabstand d ist so bemessen, daß sich die Abbildungen der Zwischenbildblenden in der Kopieträgerebene K in der aus Fig. 3 ersichtlichen Weise überlappen. Dabei ergänzen sich die Belichtungen der halbdurchlässigen, sich kreuzweise überlappenden Randbereiche zu einer der Belichtung der voll durchlässigen Bereiche entsprechenden Gesamtbelichtung.

## Patentanspruch

Belichtungsanordnung für Kopiergeräte, bei der die Vorlage durch mehrere relativ zur Vorlage gemeinsam bewegte Objektive streifenförmig auf eine lichtempfindliche Schicht abgebildet wird, wobei die Objektive aus mehreren in Richtung des Strahlengangs hintereinander angeordneten Linsenleisten bestehen, zwischen denen in einer Zwischenbildebene Blenden angeordnet sind, deren Öffnungen so auf die lichtempfindliche Schicht abgebildet werden, deß sich die Randbereiche zweier quer zur Bewegungsrichtung der Linsenleisten benachbarter Blendenöffnungen überlappen, gekennzeichnet durch die folgende Form und Anordnung der Zwischenbildblenden:

a) Jede der gleichgroßen Blenden besteht aus einem voll lichtdurchlässigen Innenteil (1d) und einem teildurchlässigen, koaxial zum Innenteil angeordneten Außenteil (1c).

b) Das Innenteil (1d) hat die Form eines regelmäßigen Sechsecks, dessen Kanten (1e) Kreisbögen sind, deren Krümmungsmittelpunkte auf einem zum Mittelpunkt des Sechsecks konzentrischen Kreis liegen, dessen Durchmesser größer als der des Umkreises des Sechsecks ist.

c) Das Außenteil wird durch die vom Sechseck nicht überdeckten Teile (1c) der Umkreisfläche (1b) des Sechsecks gebildet.

d) Die Mittelpunkte und je zwei gegenüberliegende Ecken jedes der Blendensechsecke in der leistenförmigen Anordnung der Objektive liegen auf einer Geraden (M) in Leistenrichtung.

e) Die Mittelpunkte zweier benachbarter Blendenbilder haben einen Abstand, der kleiner ist als der Umkreisdurchmesser und größer als der Umkreisradius, so daß sich linsenförmige Randüberlappungen der Blendenbilder ergeben.

## Claim

Exposure arrangement for copying apparatus in which the original is projected strip by strip onto a light-sensitive layer by several objectives moved together relative to the original, the objectives consisting of several strips of lenses arranged one behind the other in the direction of the ray path, between which strips, in an intermediate image plane, diaphragms are arranged, the openings of which are projected onto the light-sensitive layer in such a manner that the edge regions of two diaphragm openings, which are adjacent perpendicularly to the direction of movement of the lens strips, overlap, characterised by the following shape and arrangement of the intermediate image diaphragms:

a) each of the diaphragms, which are of uniform size, consists of a completely light-transmitting inside part (1d) and a partially transmitting outside part (1c) arranged coaxially with the inside part;

b) the inside part (1d) has the shape of a regular hexagon, the sides (1e) of which are arcs of circles, the centres of curvature of which arcs lie on a circle concentric with the centre of the hexagon, the diameter of which circle is greater than that of the circumscribed circle of the hexagon;

c) the outside part is formed by the portions (1c) of the area of the circumscribed circle (1b) of the hexagon that are not covered by the hexagon;

d) the centres and, in each case, two opposite corners of each of the diaphragm hexagons in the strip-form arrangement of the objectives lie on a straight line (M) in the direction of the strip;

e) the centres of two adjacent diaphragm images are at a distance from each other that is smaller than is the diameter of the circumscribed circle and is greater than is the radius of the circumscribed circle, so that lens-shaped edge overlappings of the diaphragm images result.

## Revendication

Dispositif d'exposition pour photocopieur optique, dans lequel on reproduit sous forme de bande un original sur une couche sensible à la lumière par plusieurs objectifs se déplaçant en commun par rapport à l'original, les objectifs étant constitués de plusieurs barrettes formant des lentilles se succédant suivant la direction du trajet dur rayonnement et entre lesquelles sont interposées dans un plan image intermédiaire des diaphragmes dont les ouvertures sont reproduites sur la couche sensible à la lumière de telle manière que les régions marginales de deux ouvertures voisines suivant la direction perpendiculaire aux barrettes formant des lentilles se chevauchent, caractérisé par la forme et l'agencement suivant des diaphragmes pour l'image intermédiaire:

a) Chaque diaphragme, de même dimension, est constitué d'une partie (1d) intérieure entièrement transparente et d'une partie (1c) extérieure partiellement transparente et disposée coaxialement à la partie intérieure.

b) la partie (1d) intérieure a la forme d'un hexagone régulier dont les côtés (1e) sont des arcs de cercle ayant leur centre de courbure sur un cercle, qui admet pour centre le centre de l'hexagone et dont le diamètre est plus grand que celui du cercle circonscrit à l'hexagone.

c) la partie extérieure est formée par la partie (1c) de la surface (1b) circonscrite à l'hexagone qui n'est pas recouverte par l'hexagone.

d) le centre et chaque paire d'angles opposés de chaque hexagone de l'agencement en forme de barrettes des objectifs se trouvent sur une droite (M) ayant la direction des barrettes.

e) les centres de deux images voisines de diaphragme sont à une distance l'une de l'autre, qui est inférieure au diamètre du cercle circonscrit et supérieure au rayon du cercle circonscrit de manière à obtenir des chevauchements marginaux en forme de lentille des images des diaphragmes.

Fig. 1

Fig. 2

Fig. 3